(19) Europäisches Patentamt
European Patent Office
Office européen des brevets

(11) **EP 2 126 393 B1**

(12) **EUROPÄISCHE PATENTSCHRIFT**

(45) Veröffentlichungstag und Bekanntmachung des Hinweises auf die Patenterteilung:
**20.10.2010 Patentblatt 2010/42**

(21) Anmeldenummer: **07856344.2**

(22) Anmeldetag: **04.12.2007**

(51) Int Cl.:
**F16D 33/20** (2006.01)

(86) Internationale Anmeldenummer:
**PCT/EP2007/010502**

(87) Internationale Veröffentlichungsnummer:
**WO 2008/080483 (10.07.2008 Gazette 2008/28)**

(54) **HYDRODYNAMISCHE KUPPLUNG**

HYDRODYNAMIC COUPLING

EMBRAYAGE HYDRODYNAMIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **22.12.2006 DE 102006062230**

(43) Veröffentlichungstag der Anmeldung:
**02.12.2009 Patentblatt 2009/49**

(73) Patentinhaber: **Voith Patent GmbH 89522 Heidenheim (DE)**

(72) Erfinder: **SCHIPS, Rainer 79479 Ellwangen (DE)**

(74) Vertreter: **Dr. Weitzel & Partner Patentanwälte Friedenstrasse 10 89522 Heidenheim (DE)**

(56) Entgegenhaltungen:
**FR-A- 1 446 027    FR-A- 1 494 032**
**GB-A- 359 501    US-A- 2 635 429**

**Beschreibung**

Die Erfindung betrifft eine hydrodynamische Kupplung, das heißt eine Strömungsmaschine, die nach dem Föttinger-Prinzip arbeitet, um Antriebsleistung hydrodynamisch und somit verschleißfrei zu übertragen.

Hydrodynamische Kupplungen sind seit Jahrzehnten bekannt. Sie weisen ein Pumpenrad und ein Turbinenrad auf, die miteinander einen torusförmigen, mit Arbeitsmedium befüllten oder befüllbaren Arbeitsraum ausbilden. Der Fachmann unterscheidet zwischen Konstantfüllungskupplungen und durchflossenen Kupplungen. Bei Konstantfüllungskupplungen befindet sich das Arbeitsmedium stets innerhalb der hydrodynamischen Kupplung. Bei durchflossenen hydrodynamischen Kupplungen ist ein externer Arbeitsmediumkreislauf an der Kupplung angeschlossen, so dass das Arbeitsmedium über einen Einlass in die hydrodynamische Kupplung strömt und über einen Auslass aus der hydrodynamischen Kupplung abgeleitet wird. Die vorliegende Erfindung ist bei beiden Bauarten von hydrodynamischen Kupplungen anwendbar.

Hydrodynamische Kupplungen werden sowohl in Kraftfahrzeugen, insbesondere im Antriebsstrang, zum Beispiel zum Anfahren des Fahrzeugs, als auch in stationären Anlagen zur verschleißfreien Übertragung von Antriebsleistung auf eine angetriebene Maschine eingesetzt. Die ersteren Kupplungen können als Fahrzeugkupplungen, die letzteren als Industriekupplungen bezeichnet werden. Die vorliegende Erfindung ist sowohl bei Fahrzeugkupplungen als auch bei Industriekupplungen anwendbar.

Wenn hydrodynamische Kupplungen im Antriebsstrang eines Kraftfahrzeugs eingesetzt werden, beispielsweise als Anfahrkupplungen, so ist es grundsätzlich wünschenswert, dass die Kupplung in der Lage ist, eine hohe Leistung beziehungsweise ein hohes Drehmoment über den hydrodynamischen Arbeitsmediumkreislauf, in der Regel Öl- oder Wasserkreislauf, von der Antriebsseite (dem Pumpenrad) auf die Abtriebsseite (das Turbinenrad) zu übertragen. Somit wird eine hydrodynamische Kupplung vorteilhaft derart ausgelegt, dass sie einen möglichst hohen $\lambda$-Verlauf beziehungsweise Drehmomentverlauf über dem Drehzahlverhältnis $v$ beziehungsweise dem Schlupf $s$ aufweist. Unter Drehmomentverlauf ist der Verlauf des bei einem konkreten Drehzahlverhältnis beziehungsweise einem konkreten Schlupf mit der hydrodynamischen Kupplung übertragbaren Drehmoments gemeint. Die Leistungszahl $\lambda$ ist ein dem Fachmann bekannter charakteristischer Parameter der hydrodynamischen Kupplung. Die Definition von $\lambda$ ist beispielsweise in Dubbel, Taschenbuch für den Maschinenbau, 18. Auflage, Seite R 50 offenbart. Sie ergibt sich aus dem am Pumpenrad anliegenden Moment beziehungsweise aus der am Pumpenrad anliegenden Leistung im Verhältnis zu der Dichte $\rho$ des Arbeitsmediums, dem Kreislaufdurchmesser D und der Winkelgeschwindigkeit w der Pumpe:

$$\lambda = \frac{M_P}{\rho D^5 \omega_P{}^2} = \frac{P_P}{\rho D^5 \omega_P{}^3}$$

Das Drehzahlverhältnis $v$ ergibt sich aus der Drehzahl des Turbinenrads dividiert durch die Drehzahl des Pumpenrads. Der Schlupf $s$ in Prozent ergibt sich wie folgt:

$$s = (1 - v) \times 100$$

Ein hoher Drehmomentverlauf beziehungsweise $\lambda$-Verlauf einer hydrodynamischen Kupplung kann jedoch dazu führen, dass in Zuständen hohen Schlupfes, beispielsweise bei 100 Prozent Schlupf, beim Beschleunigen des Fahrzeugs aus dem Stillstand oder einer langsamen Geschwindigkeit der Motor über die hydrodynamische Kupplung abgewürgt wird, weil das von der hydrodynamischen Kupplung übertragene Moment, gegen welches der Motor arbeitet, zu groß ist. Um dies zu verhindern, hat man bisher durch eine entsprechende Verkleinerung der hydrodynamischen Kupplung beziehungsweise Reduzierung der Leistungsfähigkeit der hydrodynamischen Kupplung den $\lambda$-Verlauf ausreichend abgesenkt, um auch bei 100 Prozent Schlupf ein Abwürgen des Motors sicher auszuschließen.

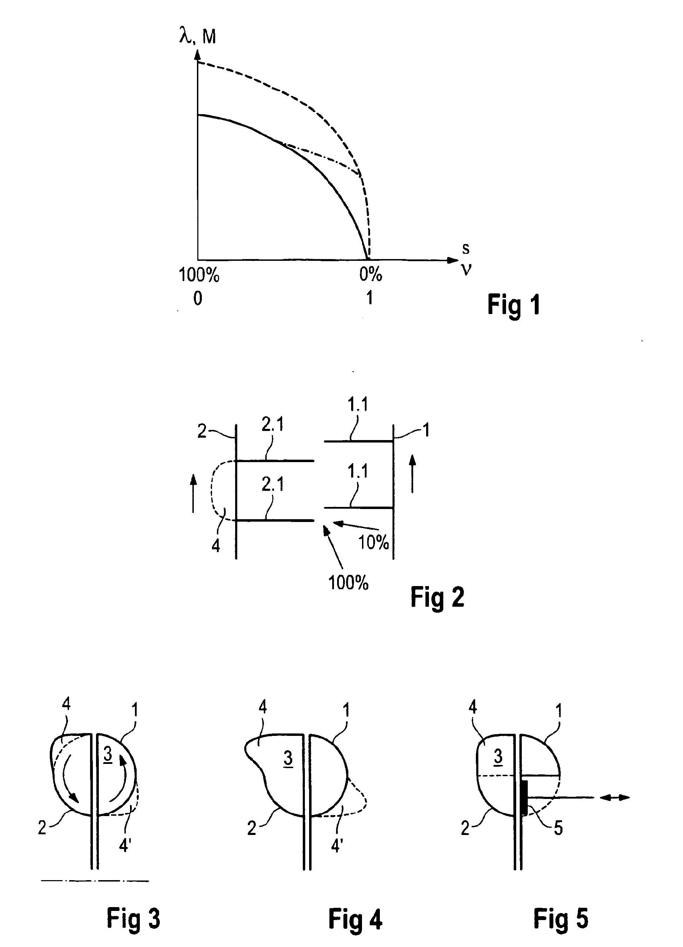

In der Figur 1 ist in einer durchgezogenen Linie ein $\lambda$-Verlauf beziehungsweise Drehmomentverlauf (M) über dem Schlupf $s$ beziehungsweise dem Drehzahlverhältnis $v$ dargestellt, welcher ein Abwürgen der Antriebsmaschine verhindert. In einer gestrichelten Linie ist ein $\lambda$-Verlauf beziehungsweise Drehmomentverlauf dargestellt, welcher die Kupplungseigenschaften im Bereich eines kleinen Schlupfes beziehungsweise großen Drehzahlverhältnisses gegenüber dem durch die durchgezogene Linie dargestellten Verlauf verbessert. Dieser gestrichelt dargestellte Verlauf könnte jedoch zu einem Abwürgen der Antriebsmaschine im Bereich großen Schlupfes führen.

Wünschenswert wäre eine Leistungscharakteristik beziehungsweise $\lambda$-Verlauf der hydrodynamischen Kupplung, welcher die Vorteile beider genannten Auslegungscharakteristiken vereint, siehe beispielsweise den strichpunktiert dargestellten Verlauf. Dies gilt sowohl für hydrodynamische Kupplungen in Kraftfahrzeugen als auch in stationären Anlagen (Industriekupplungen).

Verschiedene von der Kreisform abweichende Querschnitte des Arbeitsraums hydrodynamischer Kupplungen zeigen die Dokumente FR-A-1 494 032 und US-A-2 635 429. Dem erstgenannten Dokument, dessen Merkmale im Oberbegriff von Anspruch 1 zusammengefasst sind, kann man einen Arbeitsraumquerschnitt entnehmen, der radial innen im Pumpenrad gegenüber der Kreisform etwas erweitert ist. Beim zweitgenannten Dokument ist die Auswölbung star in Radialrichtung ausgeführt und radial innen im Turbinenrad vorgesehen.

Der Erfindung liegt die Aufgabe zugrunde, eine hydrodynamische Kupplung darzustellen, welche die oben genannten Probleme vermeidet und den dargestellten Anforderungen gerecht wird.

Die erfindungsgemäße Aufgabe wird durch eine hydrodynamische Kupplung mit den Merkmalen von Anspruch 1 gelöst. In den abhängigen Ansprüchen sind vorteilhafte und besonders zweckmäßige Ausführungen der Erfindung angegeben.

Herkömmlich ist der Arbeitsraum einer hydrodynamischen Kupplung im Axialschnitt durch die hydrodynamische Kupplung gesehen kreisförmig beziehungsweise im wesentlichen kreisförmig. Die Bezeichnung kreisförmig bezieht sich dabei bei einem vollständigen Axialschnitt durch die hydrodynamische Kupplung auf jede der beiden Schnittflächen durch den Arbeitsraum, die sich bei einem torusförmigen Arbeitsraum zwangsläufig ergeben. Die Form beziehungsweise Umfangskontur des Arbeitsraums ist im Hinblick auf die gewünschte Kreislaufströmung des Arbeitsmediums radial von innen nach außen im Pumpenrad, dann axial in das Turbinenrad, dann radial von außen nach innen im Turbinenrad und schließlich axial vom Turbinenrad in das Pumpenrad gewählt. Mittels dieser Kreislaufströmung im Arbeitsraum wird das Drehmoment beziehungsweise die Drehleistung vom Pumpenrad auf das Turbinenrad übertragen.

Auch bei der erfindungsgemäßen hydrodynamischen Kupplung ist der Arbeitsraum im Axialschnitt durch die hydrodynamische Kupplung gesehen kreisförmig beziehungsweise im wesentlichen kreisförmig. Er weist jedoch abweichend von einer Vollkreisform eine Auswölbung in Axialrichtung am Umfang des Arbeitsraums im radial äußeren Bereich des Turbinenrads, bezogen auf die Drehachse der Kupplung, auf. Zusätzlich kann auch eine zweite Auswölbung im radial inneren Bereich des Pumpenrads ausgeführt sein.

Diese erfindungsgemäß vorgesehene Auswölbung hat folgende Wirkung: Wenn das Arbeitsmedium aus dem Pumpenrad in das Turbinenrad einströmt, so hat es - wie beschrieben - zumindest im Axialschnitt durch die hydrodynamische Kupplung gesehen, eine Strömungsrichtung im wesentlichen parallel zur Kupplungsdrehachse. Das Arbeitsmedium, welches das Pumpenrad dabei im radial äußeren Bereich des Pumpenrads verlässt, strömt somit in Richtung der Auswölbung und in diese hinein. Aufgrund der zusätzlich zu beachtenden Umfangskomponente in der Arbeitsmediumströmung vom Pumpenrad in das Turbinenrad, bezogen auf die Umfangsrichtung der hydrodynamischen Kupplung und somit kreisringförmig um die Drehachse der hydrodynamischen Kupplung herum, findet jedoch nicht in jedem Betriebszustand eine im wesentlichen in die Auswölbung hineingerichtete Arbeitsmediumströmung statt. Vielmehr gibt es bestimmte Betriebszustände, nämlich bei einem großen Schlupf zwischen Pumpenrad und Turbinenrad, in welchen die Umfangskomponente der Arbeitsmediumströmung derart ausgeprägt ist, dass die Strömung stärker in Umfangsrichtung der hydrodynamischen Kupplung gerichtet ist als in Axialrichtung der hydrodynamischen Kupplung. In diesen Betriebszuständen findet nur bedingt eine direkte Einströmung von Arbeitsmedium in die Auswölbung oder im wesentlichen keine oder keine direkte Einströmung von Arbeitsmedium in die Auswölbung statt. Bei einem geringen Schlupf hingegen ist die Arbeitsmediumströmung weniger in Umfangsrichtung und somit stärker in Axialrichtung gerichtet, und die direkte Strömung in die Auswölbung hinein ist vergleichsweise ausgeprägter.

Immer dann, wenn die Strömungsrichtung vom Pumpenrad in das Turbinenrad weniger stark in die Auswölbung hinein gerichtet ist, findet eine vergleichsweise stärkere Verwirbelung des Arbeitsmediums statt, was das maximal vom Pumpenrad auf das Turbinenrad übertragbare Drehmoment beziehungsweise die Leistungszahl der hydrodynamischen Kupplung vermindert. Somit wird genau jenes erreicht, was in der Beschreibungseinleitung als wünschenswert dargestellt wurde. In Betriebszuständen mit einem großen Schlupf ist die Momentenübertragung relativ verringert, im Vergleich zu einer hydrodynamischen Kupplung ohne die erfindungsgemäße Auswölbung im Arbeitsraum, und in Betriebszuständen mit einem geringen Schlupf ist die Leistungsübertragung beziehungsweise Drehmomentübertragung vollständig oder nahezu unverändert beziehungsweise nicht vermindert im Vergleich zu einem herkömmlichen vollständig oder im wesentlichen kreisförmigen Arbeitsraumquerschnitt.

Man kann die erfindungsgemäße Wölbung allgemein wie folgt beschreiben: Wenn der Umfang des Arbeitsraums der hydrodynamischen Kupplung in einem Axialschnitt durch die hydrodynamische Kupplung gespiegelt über einer Achssenkrechten, die durch den Trennspalt zwischen Pumpenrad und Turbinenrad senkrecht zur Drehachse der hydrodynamischen Kupplung verläuft, symmetrisch ist, so stellt die Auswölbung eine Abweichung des Umfangs von diesem symmetrischen "Grundverlauf" des Umfangs dar. Alternativ oder zusätzlich kann als Spiegelachse zur Beschreibung dieser Symmetrieabweichung auch eine Achsparallele zur Drehachse der hydrodynamischen Kupplung herangezogen werden, welche auf dem mittleren Durchmesser durch den Arbeitsraum, das heißt in der Regel durch das Rotationszentrum von Arbeitsmedium im Arbeitsraum im Betrieb der hydrodynamischen Kupplung, verläuft. Somit wird deutlich, dass der Begriff "im Wesentlichen kreisförmig" beziehungsweise "kreisförmig" weitumfassend zu verstehen ist und auch elliptische, ovale und andere von der exakten Kreisform abweichende Geometrien umfassen soll.

Die konkrete Form der Auswölbung kann verschiedenartig ausgeführt sein. Denkbar ist eine im Axialschnitt durch die hydrodynamische Kupplung eckige Auswölbung, wobei die Ecke auch abgerundet sein kann. Es kann eine einzige Ecke oder es können eine Vielzahl von Ecken vorgesehen sein. Bei einer einzigen Ecke weist die Auswölbung beispielsweise zwei in etwa oder genau gleichlange Seiten auf, die über die Ecke, welche abgerundet sein kann, verbunden sind. Die beiden Seiten können rechtwinklig zueinander angeordnet sein oder auch mit einem anderen Winkel, einem spitzen Winkel oder einem stumpfen Winkel.

Die Auswölbung kann alternativ auch bogenförmig oder teilkreisförmig sein, mit einem gegenüber dem Durchmesser des Arbeitsraumquerschnitts abweichenden Durchmesser. Andere Formen sind denkbar.

In Umfangsrichtung betrachtet kann die Auswölbung kontinuierlich oder unterbrochen ausgeführt sein. Unter unterbrochen ist dabei zu verstehen, dass nur einzelne Räume zwischen zwei in Umfangsrichtung benachbart zueinander angeordneten Schaufeln mit einer entsprechenden Auswölbung versehen sind, oder Teile dieser Räume. Beispielsweise kann jeder zweite, dritte, vierte oder n-te Raum zwischen je zwei Schaufeln mit der Auswölbung versehen sein.

Bei einer in Umfangsrichtung kontinuierlich ausgeführten Auswölbung kann diese einen konstanten Querschnitt oder einen über der Umfangsrichtung variierenden Querschnitt aufweisen.

Besondere Vorteile hinsichtlich des Drehmomentverlaufs beziehungsweise des $\lambda$-Verlaufs ergeben sich bei Vorsehen der erfindungsgemäßen Auswölbung in einer hydrodynamischen Kupplung mit einer Drosselscheibe. Eine solche Drosselscheibe ist ein mechanischer Körper, der wahlweise in den Arbeitsraum einbringbar und aus diesem herausnehmbar ist, beispielsweise durch Verschieben, Verdrehen oder dergleichen, um den Arbeitsmediumkreislauf im Arbeitsraum zu beeinflussen. Bei in den Arbeitsraum eingebrachter Drosselscheibe wird der Arbeitsmediumkreislauf im Arbeitsraum gestört und somit die Leistung beziehungsweise die Drehmomentübertragung im Vergleich zu einem ungestörten Arbeitsmediumkreislauf ohne eingebrachte Drosselscheibe reduziert.

Selbstverständlich kann der mechanische Körper eine andere Form als die einer Scheibe aufweisen, so dass man allgemein mittels eines Drosselelements den Arbeitsmediumkreislauf wahlweise stören kann.

Wenn eine solche Drosselscheibe im Arbeitsraum vorgesehen ist, kann sie besonders vorteilhaft - wiederum in einem Axialschnitt durch die hydrodynamische Kupplung betrachtet - in einem Sektor des Querschnitts des Arbeitsraums angeordnet beziehungsweise einbringbar sein, welcher der Auswölbung diametral gegenübersteht. Beispielsweise ist die Auswölbung im radial äußeren Bereich im Turbinenrad und der Sektor für die Drosselscheibe im radial inneren Bereich im Pumpenrad vorgesehen. Insbesondere, wenn man den Querschnitt des Arbeitsraums im Axialschnitt durch die hydrodynamische Kupplung in vier Quadranten unterteilt und diese Quadranten beginnend radial innen im Pumpenrad, nach radial außen im Pumpenrad, radial außen im Turbinenrad und radial innen im Turbinenrad von 1 bis 4 durchnummeriert, so kann die Drosselscheibe im ersten Quadranten und die Auswölbung im dritten Quadranten vorgesehen sein. Auch eine andere Ausführung ist denkbar, beispielsweise eine Anordnung der Drosselscheibe im vierten Quadranten.

Man hat festgestellt, dass die erfindungsgemäße Wirkung dadurch verstärkt werden kann, dass die hydrodynamische Kupplung schrägbeschaufelt ausgeführt wird. Dies bedeutet, dass die Schaufeln des Pumpenrads und Turbinenrads gegenüber einer achssenkrechten Ebene durch die hydrodynamische Kupplung nicht senkrecht stehen, sondern mit einem Winkel kleiner als 90° angeordnet sind. Der Anstellungswinkel (gegenüber dieser Ebene) der Pumpenradschaufeln kann von jenem der Turbinenradschaufeln abweichen, beispielsweise können die Schaufeln des Pumpenrads stärker schräggestellt sein, als die Schaufeln des Turbinenrads. Das bedeutet, dass die Schaufeln des Pumpenrads beispielsweise einen Winkel von 65° und die Schaufeln des Turbinenrads einen Winkel von 70° gegenüber der achssenkrechten Ebene aufweisen.

Prinzipiell kann die erfindungsgemäße Wirkung, nämlich die Verminderung des übertragenen Drehmoments bei großem Schlupf, mit zunehmender Schrägstellung der Schaufeln des Pumpenrads und Turbinenrads verstärkt werden. Allerdings hat man festgestellt, dass bei einer zu großen Schrägstellung, beispielsweise bei einem Schrägstellungswinkel von weniger als 60°, die Wirkung verloren gehen kann. Vorteilhaft liegt der Schrägstellungswinkel der Schaufeln des Pumpenrads und Turbinenrads daher im Bereich von 60° bis weniger als 90°, insbesondere von 60° bis 80° oder 65° bis 75°. Das Pumpenrad kann insbesondere um 5° oder 10° stärker geneigt sein als das Turbinenrad.

Ein weiterer Vorteil der erfindungsgemäßen Maßnahme ist, dass eine entsprechend ausgestaltete hydrodynamische Kupplung vergleichsweise geringe Leerlaufverluste aufweist, da auch die Luft, welche sich im Arbeitsraum im vom Arbeitsmedium entleerten Zustand befindet, in die erfindungsgemäß vorgesehene, vom Grundverlauf des Arbeitsraums abweichende Auswölbung hineingetragen und verwirbelt wird, und so die unerwünschte Drehmomentübertragung vermindert oder unterbunden wird.

Die Erfindung soll nachfolgend anhand der Figuren exemplarisch beschrieben werden.

Es zeigen:

Figur 1     einen $\lambda$-Verlauf beziehungsweise einen Drehmomentenverlauf über dem Schlupf beziehungsweise dem Drehzahlverhältnis einer erfindungsgemäß ausgeführten hydrodynamischen Kupplung;

Figur 2     eine schematische Draufsicht auf die Arbeitsmediumströmung in Radialrichtung der hydrodynamischen Kupplung von außen nach innen;

Figur 3     mögliche Anordnungen der erfindungsgemäß vorgesehenen Auswölbung;

Figur 4     alternative Ausführungsformen für die Auswölbung;

Figur 5     eine hydrodynamische Kupplung mit Auswölbung und Drosselscheibe;

Figur 6     eine schematische Darstellung zur Erläuterung einer mathematischen Beschreibung einer erfindungsgemäßen Ausführungsform für die Auswölbung;

Figur 7     eine mögliche "Grundform" für den Umfang des Arbeitsraums im Axialschnitt durch die hydrodynamische Kupplung, an welche zusätzlich die erfindungsgemäße Auswölbung angefügt werden kann.

Die Figur 1 wurde bereits in der Beschreibungseinleitung erläutert. Mit der erfindungsgemäßen hydrodynamischen Kupplung kann ein λ-Verlauf beziehungsweise ein Drehmomentenverlauf über dem Schlupf beziehungsweise dem Drehzahlverhältnis, beginnend bei 100 Prozent Schlupf, zunächst entlang der ausgezogenen Linie, dann entlang der strichpunktierten Linie und schließlich entlang der gestrichelten Linie erreicht werden. Bisher war lediglich ein entsprechender Verlauf ausschließlich entlang der durchgezogenen Linie oder entlang der gestrichelten Linie möglich.

In der Figur 2 erkennt man schematisch die Axialkomponente und die Umfangskomponente der Arbeitsmediumströmung vom Pumpenrad 1 in das Turbinenrad 2 bei 10 % Schlupf und bei 100 % Schlupf. Im Turbinenrad ist dabei durch die gestrichelte Linie die Auswölbung 4 angedeutet. Mit 1.1 und 2.1 sind die Pumpenradschaufeln beziehungsweise Turbinenradschaufeln von Pumpenrad 1 und Turbinenrad 2 bezeichnet. Die beiden senkrechten Pfeile links und rechts in der Figur 2 zeigen die Drehrichtung von Pumpenrad 1 und Turbinenrad 2 an.

Aus dieser Figur erkennt man besonders den Einfluss des Drehzahlverhältnisses zwischen Turbinenrad und Pumpenrad beziehungsweise des Schlupfes auf die Anströmrichtung des Arbeitsmediums mit Bezug auf die Auswölbung 4. Bei einem größeren Schlupf findet eine weniger starke Strömung des Arbeitsmediums in die Auswölbung 4 hinein statt, was zu einer stärkeren Verwirbelung und damit Störung des Arbeitsmediumkreislaufes führt. Bei einem kleineren Schlupf findet eine direktere Anströmung der Auswölbung 4 im Arbeitsraum statt, was eine geringere Verwirbelung und damit geringere Störung des Arbeitsmediumkreislaufes bewirkt.

In der Figur 3 sind mögliche Positionen für die Auswölbung 4 im Bereich des Umfangs des Arbeitsraums 3 dargestellt. Beispielsweise kann eine Auswölbung 4 im radial äußeren Bereich des Turbinenrads 2 vorgesehen sein. Zusätzlich kann eine Auswölbung 4' im radial inneren Bereich des Pumpenrads 1 vorgesehen sein.

Die Figur 4 zeigt nochmals schematisch alternative Querschnittsflächen für die Auswölbung 4 beziehungsweise die Auswölbung 4'. Im Vergleich zur Figur 3 sind die Auswölbungen 4, 4' weniger rechtwinklig und linear begrenzt, sondern stärker abgerundet, jedoch mit einer kleineren beziehungsweise spitzeren Spitze in Axialrichtung der hydrodynamischen Kupplung.

In der Figur 5 ist eine mögliche Kombination einer Auswölbung 4 mit einer verschiebbaren Drosselscheibe 5 im Arbeitsraum 3 dargestellt. Die Drosselscheibe 5 ist in Axialrichtung in den radial inneren Bereich im Pumpenrad 1 einschiebbar und aus diesem Bereich herausschiebbar. Die Auswölbung 4 ist im radial äußeren Bereich des Turbinenrads 2 im Arbeitsraum 3 vorgesehen.

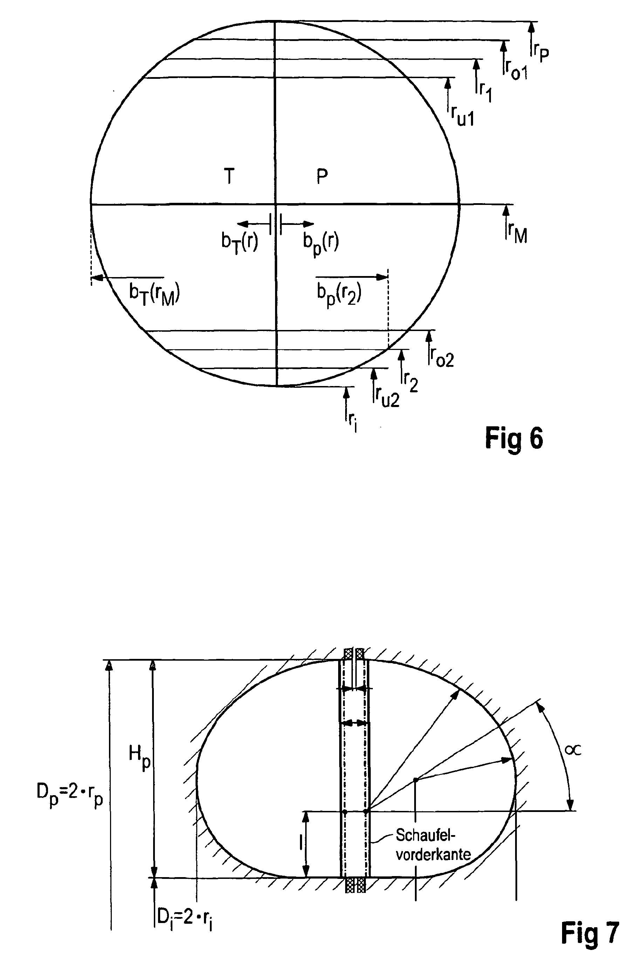

In der Figur 6 sind verschiedene Radien zur Definition des Umfangs des Arbeitsraums in einem Axialschnitt durch die hydrodynamische Kupplung dargestellt. Bei einer Einteilung dieses Axialschnitts in vier Quadranten (siehe die Symmetrielinien) bezieht sich der Radius $r_1$ auf die beiden radial äußeren Quadranten, das heißt je einen Quadranten von Turbinenrad (T) und Pumpenrad (P). Der Radius $r_2$ bezieht sich auf die beiden radial innen gelegenen Quadranten, je einen Quadrant von Pumpenrad und einen Quadrant von Turbinenrad.

$r_M$ beschreibt den mittleren Radius des Arbeitsraums, das heißt jene Symmetrielinie parallel zur Drehachse der hydrodynamischen Kupplung, welche den Querschnitt des Arbeitsraums in zwei spiegelbildlich gleichgroße Hälften unterteilt.

$r_P$ beschreibt den äußeren Radius und $r_i$ beschreibt den inneren Radius des Arbeitsraumes.

Die Radien $r_u$ und $r_o$ jeweils mit dem Indize 1 und 2 beschreiben die Grenzwerte der radialen Bereiche, innerhalb von welchem der Umfang gemäß den nachstehenden Formeln definiert wird, um eine erfindungsgemäß vorgesehene Auswölbung zu beschreiben. Diese Radien ergeben sich mit Bezug auf den äußeren und den inneren Radius des Arbeitsraums wie folgt:

$$r_{o1} = r_i + 0{,}97\,(r_P - r_i)$$

$$r_{u1} = r_i + 0{,}75\,(r_P - r_i)$$

$$r_{o2} = r_i + 0{,}15 \, (r_P - r_i)$$

$$r_{u2} = r_i + 0{,}03 \, (r_P - r_i)$$

Ferner ist der mittlere Radius wie folgt definiert:

$$r_M = 0{,}5 \, (r_P + r_i)$$

Die Höhe des Arbeitsraums ist wie folgt definiert:

$$H = r_P - r_i$$

Der Umriss der erfindungsgemäßen Auswölbung kann dann gemäß einer oder mehrere der nachstehenden Formeln beschrieben werden:

(1) Der Umriss der Auswölbung für einen beliebigen (also nicht unbedingt für jeden) Radius $r_1$ zwischen $r_{u1}$ und $r_{o1}$ erfüllt die folgende Bedingung

$$1{,}05 \cdot b_T \left( r_2 \right) < b_T \left( r_1 \right) < 1{,}5 \cdot b_T \left( r_M \right),$$

wobei

$$r_2 = r_i + r_P - r_1$$

ist.

(2) Der Umriss der Auswölbung für einen beliebigen (also nicht unbedingt für jeden) Radius $r_1$ zwischen $r_{u1}$ und $r_{o1}$ erfüllt die folgende Bedingung

$$1{,}05 \cdot b_P \left( r_1 \right) < b_T \left( r_1 \right) < 1{,}5 \cdot b_P \left( r_M \right)$$

(3) Der Umriss der Auswölbung für einen beliebigen (also nicht unbedingt für jeden) Radius $r_2$ zwischen $r_{u2}$ und $r_{o2}$ erfüllt die folgende Bedingung

$$1{,}05 \cdot b_T \left( r_2 \right) < b_P \left( r_2 \right) < 1{,}5 \cdot b_T \left( r_M \right)$$

Der Faktor 1,05 bei den drei oben genannten Formeln kann auch durch einen anderen Faktor, welcher etwas größer als 1 ist, ersetzt werden, beispielsweise im Bereich zwischen 1,01 und 1,1 liegen.

Das Verhältnis der axialen Breite B des Arbeitsraums zum Außendurchmesser $D_p$ des Arbeitsraums beziehungsweise im Verhältnis zur Höhe H des Arbeitsraums kann wie folgt lauten:

$$0{,}2 < \frac{B}{D_P} < 0{,}35$$

$$0{,}6 < \frac{B}{H} < 1{,}6$$

In der Figur 7 ist nochmals rein schematisch eine Grundform eines Arbeitsraums dargestellt, die vorliegend als im Wesentlichen kreisförmig bezeichnet wird. An eine solche Grundform kann erfindungsgemäß eine Auswölbung angeschlossen werden.

**Patentansprüche**

1. Hydrodynamische Kupplung
   mit einem Pumpenrad (1) und einem Turbinenrad (2), die miteinander einen torusförmigen Arbeitsraum (3) ausbilden,
   **dadurch gekennzeichnet, dass**
   der Arbeitsraum (3) im Axialschnitt durch die hydrodynamische Kupplung gesehen einen kreisförmigen oder im wesentlichen kreisförmigen Querschnitt mit einer Auswölbung (4) in Axialrichtung am Umfang im radial äußeren Bereich des Turbinenrads (2) aufweist.

2. Hydrodynamische Kupplung gemäß Anspruch 1, **dadurch gekennzeichnet, dass** die Auswölbung (4) im Axialschnitt durch die hydrodynamische Kupplung eckig, insbesondere mit einer oder mehreren abgerundeten Ekken, ausgeführt ist.

3. Hydrodynamische Kupplung gemäß Anspruch 1, **dadurch gekennzeichnet, dass** die Auswölbung (4) im Axialschnitt durch die hydrodynamische Kupplung bogenförmig oder teilkreisförmig ist.

4. Hydrodynamische Kupplung gemäß einem der Ansprüche 1 bis 3, **dadurch gekennzeichnet, dass** die Auswölbung (4) in Umfangsrichtung der hydrodynamischen Kupplung kontinuierlich, insbesondere mit konstantem Querschnitt ausgeführt ist.

5. Hydrodynamische Kupplung gemäß einem der Ansprüche 1 bis 3, **dadurch gekennzeichnet, dass** die Auswölbung (4) in Umfangsrichtung der hydrodynamischen Kupplung diskontinuierlich mit variierender Querschnittsfläche oder mit Unterbrechungen ausgeführt ist.

6. Hydrodynamische Kupplung gemäß einem der Ansprüche 1 bis 5, **dadurch gekennzeichnet, dass** die hydrodynamische Kupplung ein Drosselelement, insbesondere eine Drosselscheibe (5), aufweist, welche(s) wahlweise in den Arbeitsraum (4) einbringbar ist, um den Arbeitsmediumkreislauf im Arbeitsraum (4) zu stören.

7. Hydrodynamische Kupplung gemäß Anspruch 6, **dadurch gekennzeichnet, dass** die Drosselscheibe (5) in einem Sektor des Querschnitts des Arbeitsraums (3) im Axialschnitt durch die hydrodynamische Kupplung gesehen angeordnet oder einbringbar ist, welcher der Auswölbung (4) diametral gegenübersteht.

8. Hydrodynamische Kupplung gemäß einem der Ansprüche 1 bis 7, **dadurch gekennzeichnet, dass** das Pumpenrad (1) und das Turbinenrad (2) jeweils eine Vielzahl von Schaufeln aufweisen, die gegenüber einer zur Drehachse der hydrodynamischen Kupplung senkrechten Ebene mit einem Winkel von weniger als 90° schräggestellt sind, insbesondere mit einem Winkel von 60° bis 80° oder 65° bis 75°.

## Claims

1. Hydrodynamic coupling
   with an impeller (1) and a turbine wheel (2), which together form a toroidal work space (3),
   wherein
   the work space (3), when viewed in axial cross-section through the hydrodynamic coupling, is provided with a circular or essentially circular cross-section with an outward bulge (4) in the axial orientation at the perimeter of the radial outer section of the turbine wheel (2).

2. Hydrodynamic coupling according to Claim 1, wherein the outward bulge (4) in axial cross-section through the hydrodynamic coupling is developed in an angular manner, in particular with one or a plurality of rounded corners.

3. Hydrodynamic coupling according to Claim 1, wherein the outward bulge (4) in axial cross-section through the hydrodynamic coupling is arcuate or partially circular.

4. Hydrodynamic coupling according to any one of Claims 1 to 3, wherein the outward bulge (4) in the circumferential orientation of the hydrodynamic coupling is developed continuously, in particular with a constant cross-section.

5. Hydrodynamic coupling according to any one of Claims 1 to 3, wherein the outward bulge (4) in the circumferential orientation of the hydrodynamic coupling is developed intermittently with varying cross-sectional area or interruptions.

6. Hydrodynamic coupling according any one of Claims 1 to 5, wherein the hydrodynamic coupling is provided with a throttle, in particular a throttle disc (5), which can be selectively introduced into the work space (4) in order to interrupt the circulation of working fluid in the work space (4).

7. Hydrodynamic coupling according to Claim 6, wherein the throttle disc (5) is arranged or can be introduced in one sector of the cross-section of the work space (3) in axial cross-section through the hydrodynamic coupling, with said sector being diametrically opposed to the outward bulge (4).

8. Hydrodynamic coupling according to any one of Claims 1 to 7, wherein the impeller (1) and the turbine wheel (2) each has a plurality of vanes positioned obliquely at an angle of less than 90°, in particular at an angle of 60° to 80° or 65° to 75°, with respect to a plane that is perpendicular to the axis of rotation of the hydrodynamic coupling.

## Revendications

1. Coupleur hydrodynamique
   avec une pompe (1) et une turbine (2) qui forment à elles deux un espace de travail (3) de forme torique, **caractérisé en ce que**,
   vu en coupe axiale au travers du coupleur hydrodynamique, l'espace de travail (3) comporte une section transversale circulaire ou sensiblement circulaire avec, sur le pourtour dans la partie externe radiale de la turbine réceptrice (2), une partie convexe (4) dans le sens axial.

2. Coupleur hydrodynamique selon la revendication 1, **caractérisé en ce que**, vue en coupe axiale au travers du coupleur hydrodynamique, la partie convexe (4) est angulaire, notamment avec un ou plusieurs angles arrondis.

3. Coupleur hydrodynamique selon la revendication 1, **caractérisé en ce que**, vue en coupe axiale au travers du coupleur hydrodynamique, la partie convexe (4) est courbe ou en forme de cercle primitif.

4. Coupleur hydrodynamique selon l'une quelconque des revendications 1 à 3, **caractérisé en ce que** la partie convexe (4) est réalisée de manière continue, notamment avec une section transversale constante, dans la direction circonférentielle du coupleur hydrodynamique.

5. Coupleur hydrodynamique selon l'une quelconque des revendications 1 à 3, **caractérisé en ce que** la partie convexe (4) est réalisée de manière discontinue avec une surface de section transversale changeante ou avec des interruptions dans la direction circonférentielle du coupleur hydrodynamique.

6. Coupleur hydrodynamique selon l'une quelconque des revendications 1 à 5, **caractérisé en ce que** le coupleur hydrodynamique comporte un élément d'étranglement, notamment un disque d'étranglement (5), qui peut être facultativement placé dans l'espace de travail (4) afin de perturber le circuit du fluide de travail dans l'espace de travail (4).

7. Coupleur hydrodynamique selon la revendication 6, **caractérisé en ce que**, dans une vue en coupe axiale au travers du coupleur hydrodynamique, le disque d'étranglement (5) est disposé ou peut être placé dans un secteur de la section transversale de l'espace de travail (3) qui est situé diamétralement opposé à la partie convexe (4).

8. Coupleur hydrodynamique selon l'une quelconque des revendications 1 à 7, **caractérisé en ce que** la pompe (1) et la turbine (2) comportent chacune une pluralité d'aubes qui, par rapport à un plan perpendiculaire à l'axe de rotation du coupleur hydrodynamique, sont inclinées selon un angle inférieur à 90°, notamment selon un angle compris entre 60° et 80° ou entre 65° et 75°.

**Fig 1**

**Fig 2**

**Fig 3**

**Fig 4**

**Fig 5**

**Fig 6**

Schaufelvorderkante

**Fig 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 1494032 A

- US 2635429 A